# EUROPÄISCHE PATENTSCHRIFT

(11) **EP 1 627 154 B1**
(45) Veröffentlichungstag und Bekanntmachung des Hinweises auf die Patenterteilung: **17.01.2007**
(21) Anmeldenummer: 04732299.5
(22) Anmeldetag: 12.05.2004
(51) Int. Cl.: F16B 13/06, F16B 13/08, F16B 13/00, B25D 17/00

(54) **SPREIZANKER AUS METALL UND SETZWERKZEUG HIERFÜR**
EXPANDING ANCHOR MADE OF METAL AND PLACING TOOL THEREFOR
ANCRE EXTENSIBLE EN METAL ET SON OUTIL DE MISE EN PLACE

(30) Priorität: 27.05.2003 DE 10324005
(43) Veröffentlichungstag der Anmeldung: 22.02.2006
(73) Patentinhaber: fischerwerke Artur Fischer GmbH & Co. KG, 72178 Waldachtal (DE)
(72) Erfinder: HACKER, Oliver, 72160 Horb (DE); LINKA, Martin, 72160 Horb (DE)
(86) Internationale Anmeldenummer: PCT/EP2004/005051
(87) Internationale Veröffentlichungsnummer: WO 2004/106754

(56) Entgegenhaltungen:
- EP-A- 0 217 053
- EP-A- 0 395 858
- GB-A- 1 071 556

## Beschreibung

Die Erfindung betrifft einen Spreizanker aus Metall mit den Merkmalen des Oberbegriffs des Anspruchs 1.

Aus der EP 0 217 053 B1 ist ein derartiger Spreizanker zur Befestigung eines Bauteils an einem Untergrund bekannt. Der bekannte Spreizanker weist ein Ankergrundteil mit einem Außengewinde als Befestigungsmittel und einem im Durchmesser reduzierten, sich in Einbringrichtung des Spreizankers konisch erweiternden Spreizabschnitt auf. Auf diesen Spreizabschnitt ist axial verschiebbar eine Spreizhülse aufgesetzt. Diese weist einen Grundkörper auf, an den nach vorn abstehende Spreizzungen entlang einer Sollbiegelinie ausgebildet sind. Durch Aufschieben der Spreizhülse auf den Spreizabschnitt sind die Spreizzungen aufspreizbar, um den Spreizanker in einer Hinterschneidung zu verankern. Die Spreizhülse weist Schneiden an den dem Bohrlochgrund zugewandten Stirnenden der Spreizzungen auf, mittels derer die Hinterschneidung herstellbar ist. Dazu wird der bekannte Spreizanker in ein zylindrisches Bohrloch eingeführt und die Spreizhülse beispielsweise mittels einer Hammerbohrmaschine auf das Spreizelement auftrieben und zugleich in Rotation versetzt. Hierdurch wird ein radialer Abtrag in Form einer Bohrlocherweiterung erzeugt. Zur Bildung der Schneiden werden Schneideinsätze aus Hartmetall vorgeschlagen. Allerdings erfordert das Einsetzen und Befestigen dieser Schneideinsätze in den Spreizzungen neben den Materialkosten einen erheblichen Herstellungsaufwand. Hierdurch wird der als Massenprodukt hergestellte Spreizanker teuer. Verzichtet man bei der bekannten Ausgestaltung des Spreizankers jedoch auf die Einsätze und versucht statt dessen dem gesamten Material der Spreizhülse eine ausreichende Härte und Festigkeit zu verleihen, um die Schneiden an den Spreizzungen selbst auszubilden, so scheitert dies daran, dass es beim Aufspreizen der Spreizzungen häufig zum Reißen oder Abbrechen entlang der Sollbiegelinie kommt. Dies liegt darin begründet, dass die Sollbiegelinien, wie bei sämtlichen bekannten Spreizankern, aufgrund der Hülsenform gekrümmt sind. Das gewünschte Ausknicken der Spreizzungen wird hierdurch erschwert, da die Krümmung stabilisierend wirkt. Zum Ausknicken muss das Material erheblich umgeformt werden, was eine entsprechende Duktilität und geringe Wandstärken erfordert. Gerade dies steht jedoch im Gegensatz zu der geforderten Härte der Schneiden, um auch im hochfesten Beton die Wirksamkeit der Schneiden zu gewährleisten.

Der Erfindung liegt daher die Aufgabe zu Grunde, einen Spreizanker der eingangs genannten Art zu schaffen, der bei gleicher oder verbesserter Leistungsfähigkeit geringere Herstellkosten aufweist.

Diese Aufgabe wird erfindungsgemäß durch den Spreizanker mit den Merkmalen des Anspruchs 1 sowie dem Setzwerkzeug mit den Merkmalen des Anspruchs 6 gelöst. Der erfindungsgemäße Spreizanker weist eine Spreizhülse aus gehärtetem Stahl auf. Damit es nicht zu den genannten Versagensproblemen entlang der Sollbiegelinie kommt, ist diese gerade. In diesem Unterschied liegt der entscheidende Vorteil der Erfindung. Zum Ausknicken der Spreizzungen sind erheblich geringere Kräfte notwendig und diese sind wesentlich homogener entlang der Sollbiegelinie verteilt. Damit kann die Spreizhülse aus einem harten, hochfesten Material ausgebildet sein, das entsprechend spröder als die bisher eingesetzten Materialien ist. Auch kann eine größere Wandungsdicke für die Spreizhülse, insbesondere im Bereich der Sollbiegelinie, gewählt werden. Vorzugsweise wird die Spreizhülse als Stanzbiegeteil ausgeführt, das nach der Formgebung gehärtet und dann montiert wird.

In einer bevorzugten Ausführungsform weist der Spreizabschnitt ebene Gleitflächen für jede Spreizzunge auf. Eine einfache Herstellbarkeit ergibt sich für vier Gleitflächen bzw. Spreizzungen, denkbar sind aber auch mehr oder weniger. Ebene Gleitflächen haben einerseits den Vorteil, dass die Spreizzungen flächig geführt werden, während ein rotationssymmetrischer konischer Spreizabschnitt eine Linienberührung bewirken würde. Durch die flächige Führung ergibt sich wiederum eine homogene Spannungsverteilung im Bereich der Sollbiegelinie. Anderseits ergibt sich als wesentlicher Vorteil, dass die Drehmomentübertragung für die Rotationsbewegung der Schneiden über das Ankergrundteil erfolgen kann. Während bei den bekannten Spreizankern die Spreizhülse von einem hülsenartigen Setzwerkzeug über Mitnehmerklauen angetrieben werden muss, kann bei dieser Ausgestaltung der Erfindung auf eine derartige, störanfällige Drehmomentübertragung verzichtet werden. Statt dessen kann das Ankergrundteil durch ein stabiles Werkzeug in Rotation versetzt werden. Die ebenen Gleitflächen bewirken dabei eine Mitnahme der Spreizzungen. Die Spreizhülse muss lediglich axial gegenüber dem rotierenden Ankergrundteil verschoben werden. Vorzugsweise weist ein derart ausgeführter Spreizanker eine Distanzhülse auf, die der Übertragung von Schlägen eines Setzwerkzeugs auf die Spreizhülse zu deren axialer Verschiebung dient. Selbstverständlich sind die beiden Hülsen auch einstückig ausführbar. Eine separate Distanzhülse hat jedoch den Vorteil, dass das vergleichsweise teure Material der Spreizhülse nur für den hierfür notwendigen Bereich verwendet wird. Wird die Spreizhülse als Stanzbiegeteil hergestellt, so kann außerdem für diese ein gegenüber dem Nenndurchmesser kleinerer Durchmesser gewählt werden, um unnötige Reibung entlang der Bohrlochwand zu vermeiden. Die Distanzhülse, die sich dagegen nicht mitdrehen muss, kann mit Nenndurchmesser ausgeführt werden, um dem Spreizanker eine spielfreie Querkraftaufnahme zu ermöglichen.

Im Falle ebener Gleitflächen weist das Ankergrundteil vorzugsweise im Bereich der Befestigungsmittel Schlüsselangriffsflächen auf. Im Falle eines Außengewindes als Befestigungsmittel können diese beispielsweise als zwei seitliche Abflachung ausgeführt sein, im Falle eines Innengewindes als Befestigungsmittel in Form von zwei seitlichen Nuten. Dabei ist darauf zu achten, dass ausreichend tragende Gewindeanteile erhalten bleiben.

Um einen derartigen Spreizanker setzen zu können, schlägt die Erfindung ein Setzwerkzeug vor, dass entsprechende Schlüsselflächen sowie eine Treibfläche und eine Adaptereinrichtung zur Aufnahme des Setzwerkzeugs beispielsweise in einer Schlagbohrmaschine aufweist. Zum Setzen des Spreizankers wird dieser mit seinem Ankergrundteil auf das Setzwerkzeug aufgesteckt, wobei Schlüsselangriffsflächen und Schlüsselflächen gegenseitig in Eingriff gebracht werden. Im aufgesteckten Zustand sitzt die Treibfläche auf der Spreizhülse - bzw. der Distanzhülse, falls vorhanden - auf. Im Weiteren wird der Spreizanker in das Bohrloch bis zum Aufsitzen auf dessen Bohrlochgrund eingeführt. Durch eine Dreh-/Schlagbewegung des Werkzeugs, erzeugt beispielsweise von einer Schlagbohrmaschine, wird das Ankergrundteil und damit die Schneiden an der Spreizhülse in Rotation gebracht und gleichzeitig die Spreizhülse über den Spreizabschnitt des Ankergrundteils getrieben. Die Drehbewegung bewirkt, dass die Schneiden einen Abtrag und damit eine Hinterscheidung im Bohrloch erzeugen. Nach erfolgter Verspreizung wird das Setzwerkzeug abgezogen.

Eine Ausführungsform des Setzwerkzeugs für Spreizanker mit Außengewinde sieht vor, dass dieses einen hülsenartigen Teilkörper mit den Schlüsselflächen an der Innenseite sowie der Treibfläche an der Stirnseite aufweist. Hierdurch wird ein sehr einfacher Aufbau erreicht. Für Spreizanker mit Innengewinde ist ein bolzenartiger Teilkörper mit Schlüsselflächen an der Außenseite, beispielsweise in Form eines Rechteckquerschnitts, denkbar, wobei sich axial an diesen Teilkörper eine Schulter zur Bildung der Treibfläche anschließt.

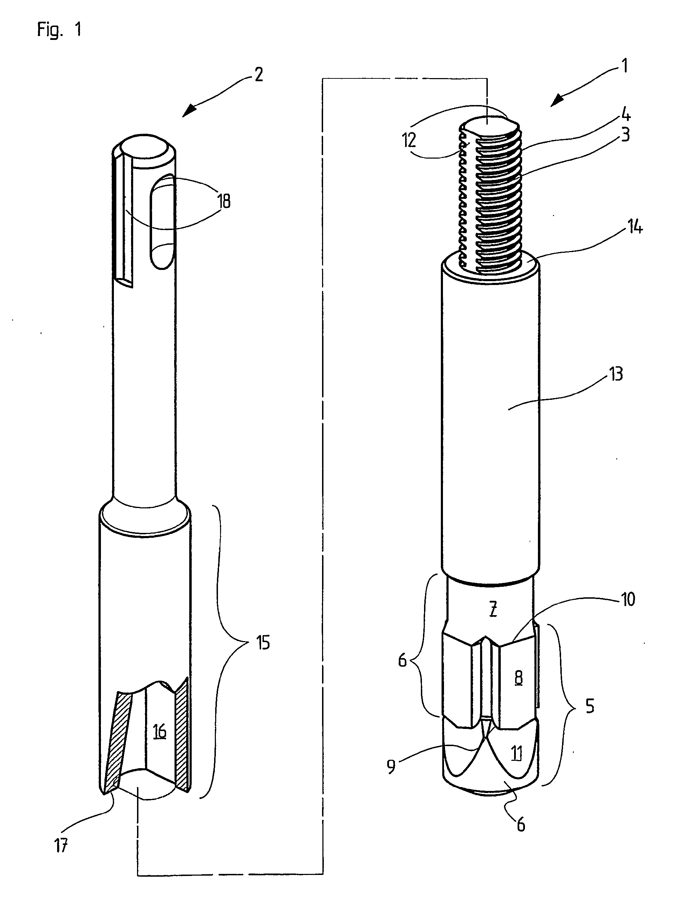

Die Erfindung wird nachfolgend anhand eines in der Zeichnung dargestellten Ausführungsbeispiels näher erläutert. Die Figur zeigt einen erfindungsgemäßen Spreizanker 1 aus Metall sowie ein erfindungsgemäßes Setzwerkzeug 2. Der Spreizanker 1 dient der Befestigung eines nicht dargestellten Gegenstandes an einem ebenfalls nicht dargestellten Untergrund. Der Spreizanker 1 weist ein Ankergrundteil 3 mit einem Außengewinde 4 als Befestigungsmittel für den Gegenstand und einem im Durchmesser reduzierten, sich in Richtung des Ankerendes 6 konisch erweiternden Spreizabschnitt 5 auf. Auf den Spreizabschnitt 5 ist eine als Stanzbiegeteil gefertigte Spreizhülse 6 aus gehärtetem Stahl mit einem Grundkörper 7 und vier Spreizzungen 8 axial verschiebbar aufgesetzt. Durch eine axiale Verschiebung in Richtung zum Ankerende 6 werden die Spreizzungen 8 radial nach außen gegen eine Bohrlochwand verspreizt. Die Spreizzungen 8 weisen Schneiden 9 zur Erzeugung einer Hinterschneidung auf. Die Spreizzungen 8 sind über gerade Sollbiegelinien 10 an den Grundkörper 7 angebunden. Hierdurch ist ein leichtes Ausknicken der Spreizzungen 8 möglich, ohne dass der gehärtete Stahl bricht. Begünstigt wird dies außerdem durch die vier ebenen Gleitflächen 11. Diese bewirken außerdem, dass ein Drehmoment vom Ankergrundteil 3 auf die Spreizhülse 6 übertragbar ist. Damit dieses Drehmoment von einem Werkzeug, hier dem Setzwerkzeug 2, auf das Ankergrundteil 3 übertragbar ist, weist dieses Schlüsselangriffsflächen 12 auf. Zur Übertragung einer axialen Kraft auf die Spreizhülse 6 weist der Spreizanker 1 eine Distanzhülse 13 mit einer Stirnfläche 14 auf. Die Distanzhülse 13 dient außerdem der Querabstützung des Spreizankers 1 im Bohrloch und entspricht daher im Durchmesser dem Nenndurchmesser.

Das Setzwerkzeug 2 weist einen hülsenartigen Teilkörper 15 mit Schlüsselflächen 16 an der Innenseite sowie eine Treibfläche 17 an der Stirnseite zur Übertragung von Stößen auf die Stirnfläche 14 der Distanzhülse 13 auf. Zur Aufnahme des Setzwerkzeugs 2, beispielsweise in einer Schlagbohrmaschine (nicht dargestellt), weist es eine Adaptereinrichtung 18 in Form normungsgemäßer Nuten auf.

Zum Setzen des Spreizankers 1 mit dem in eine Schlagbohrmaschine eingespannten Setzwerkzeug 2 wird der Spreizanker 1 in das Setzwerkzeug 2 gesteckt, so dass die Schlüsselflächen 16 mit den Schlüsselangriffsflächen 12 in Eingriff kommen und die Treibfläche 17 des Setzwerkzeugs 2 auf der Stirnfläche 14 der Distanzhülse 13 aufsitzt. In diesem Zustand wird der Spreizanker 1 in ein nicht dargestelltes Bohrloch eines Untergrunds eingeschoben, bis er auf dem Bohrlochgrund aufsitzt. Durch eine kombinierte Dreh-/Schlagbewegung der Schlagbohrmaschine wird das Ankergrundteil 3 und damit die Spreizhülse 6 in Rotation versetzt. Gleichzeitig wird die Spreizhülse 6 auf dem Spreizabschnitt 5 axial verschoben und hierdurch die Spreizzungen 8 entlang der Gleitflächen 11 radial nach außen verspreizt. Durch die Rotation der Spreizhülse 6 erzeugen die Schneiden 9 einen Abtrag in Form einer radialen Erweiterung des Bohrlochs in diesem Bereich. Diese Erweiterung wirkt als Hinterschnitt. Hierdurch wird eine formschlüssige Verankerung im Bohrloch erreicht. Nach dem Setzvorgang wird das Setzwerkzeug 2 einfach vom Spreizanker 1 abgezogen.

## Patentansprüche

1. Spreizanker (1) aus Metall zur Befestigung eines Bauteils an einem Untergrund, wobei der Spreizanker (1) ein Ankergrundteil (3) mit Befestigungsmitteln (4) und einem im Durchmesser reduzierten, sich in Einbringrichtung des Spreizankers erweiternden Spreizabschnitt (5) aufweist, auf den eine Spreizhülse (6) mit Spreizzungen (8) und mindestens einer Schneide (9) zur Erzeugung einer Hinterschneidung axial verschiebbar aufgesetzt ist, wobei die Spreizzungen (8) jeweils an einer Sollbiegelinie (10) mit einem Grundköper (7) der Spreizhülse (6) verbunden sind, **dadurch gekennzeichnet, dass** die Spreizhülse (6) aus gehärtetem Stahl besteht und die Sollbiegelinien (10) gerade sind.

2. Spreizanker nach Anspruch 1, **dadurch gekennzeichnet, dass** die Spreizhülse (6) ein Stanzbiegeteil ist.

3. Spreizanker nach Anspruch 1, **dadurch gekennzeichnet, dass** der sich erweiternde Teil des Spreizabschnitt (5) ebene Gleitflächen (11) aufweist.

4. Spreizanker nach Anspruch 1, **dadurch gekennzeichnet, dass** der Spreizanker (1) eine Distanzhülse (13) aufweist.

5. Spreizanker nach Anspruch 1, **dadurch gekennzeichnet, dass** das Ankergrundteil (3) im Bereich der Befestigungsmittel (4) Schlüsselangriffsflächen (12) aufweist.

6. Setzwerkzeug (2) zum Setzen eines Spreizankers (1), insbesondere nach Anspruch 5, wobei das Setzwerkzeug (2) mit den Schlüsselangriffsflächen (12) des Spreizankers (1) korrespondierende Schlüsselflächen (16), eine Treibfläche (17) sowie eine Adaptereinrichtung (18) aufweist, **dadurch gekennzeichnet, dass** das Setzwerkzeug (2) einen hülsenartigen Teilkörper (15) mit den Schlüsselflächen (16) an der Innenseite sowie der Treibfläche (17) an der Stirnseite aufweist.

## Claims

1. Expansible anchor (1) made of metal for affixing a component to a substrate, the expansible anchor (1) having an anchor element (3) with fixing means (4) and an expansion zone (5) of reduced diameter which widens in the direction of insertion of the expansible anchor, on which an expansion sleeve (6) having expansion tongues (8) and at least one cutter (9) for creating an undercut is mounted so as to be axially displaceable, the expansion tongues (8) each being connected along a predetermined bending line (10) to the body (7) of the expansion sleeve (6), **characterized in that** the expansion sleeve (6) consists of hardened steel and the predetermined bending lines (10) are straight.

2. Expansible anchor according to claim 1, **characterized in that** the expansion sleeve (6) is a bent stamped component.

3. Expansible anchor according to claim 1, **characterized in that** the widening portion of the expansion zone (5) has flat slide surfaces (11).

4. Expansible anchor according to claim 1, **characterized in that** the expansible anchor (1) has a spacer sleeve (13).

5. Expansible anchor according to claim 1, **characterized in that** the anchor element (3) has key-engagement surfaces (12) in the region of the fixing means (4).

6. Setting tool (2) for setting an expansible anchor (1), especially according to claim 5, the setting tool (2) having key-surfaces (16) corresponding to the key-engagement surfaces (12) of the expansible anchor (1), a driving surface (17) and an adapter device (18), **characterized in that** the setting tool (2) has a sleeve-like body part (15) having the key-surfaces (16) on the inner side and the driving surface (17) on the end face.

## Revendications

1. Ancre extensible (1) en métal destinée à la fixation d'un composant à un sous-sol, l'ancre extensible (1) comportant une pièce de base d'ancre (3) avec des moyens de fixation (4) et une section extensible (5) réduite en diamètre et s'élargissant dans le sens d'insertion de l'ancre extensible, section sur laquelle un manchon extensible (6) doté de languettes extensibles (8) et d'au moins un tranchant (9) permettant de générer une contre-dépouille est monté de manière à pouvoir coulisser axialement, chacune des languettes extensibles (8) étant reliées à un corps de base (7) du manchon extensible(6) au niveau d'une ligne de fléchissement privilégié (10), **caractérisée en ce que** le manchon extensible (6) est en acier trempé et les lignes de fléchissement privilégié (10) sont droites.

2. Ancre extensible selon la revendication 1, **caractérisée en ce que** le manchon extensible (6) est une pièce découpée et pliée.

3. Ancre extensible selon la revendication 1, **caractérisée en ce que** la partie de la section extensible (5) qui s'élargit présente des surfaces de glissement planes (11).

4. Ancre extensible selon la revendication 1, **caractérisée en ce que** l'ancre extensible (1) présente un manchon d'écartement (13).

5. Ancre extensible selon la revendication 1, **caractérisée en ce que** la pièce de base d'ancre (3) présente des faces de prise (12) au niveau des moyens de fixation (4).

6. Outil de pose (2) pour la pose d'une ancre extensible (1), en particulier selon la revendication 5, l'outil de pose (2) présentant des pans (16) correspondant aux faces de prise (12) de l'ancre extensible (1), une surface de commande (17) ainsi qu'un dispositif adaptateur (18), **caractérisé en ce que** l'outil de pose (2) présente un corps partiel comparable à un manchon (15) avec les pans (16) sur le côté intérieur et la surface de commande (17) sur la face frontale.
